# EUROPEAN PATENT APPLICATION

(11) **EP 4 574 351 A1**
(43) Date of publication of application: **25.06.2025**
(21) Application number: 22955783.0
(22) Date of filing: 19.08.2022
(51) Int. Cl.: B25J 13/00

(54) **SPACE ROBOT CONTROL DEVICE, SPACE ROBOT, SPACE ROBOT CONTROL METHOD, AND PROGRAM**

(71) Applicant: MITSUBISHI ELECTRIC CORPORATION, Chiyoda-ku Tokyo 100-8310 (JP)
(72) Inventor: IMAMURA, Naoki, Tokyo 100-8310 (JP); OHTSUKA Toshiyuki, Kyoto-shi, Kyoto 606-8501 (JP)
(74) Representative: Hoffmann Eitle
(86) International application number: PCT/JP2022/031457
(87) International publication number: WO 2024/038611

(57) **Abstract**

A space robot control apparatus (1A) controls a space robot (100) being a robot to perform a motion attenuation operation to attenuate, with a manipulator, a motion of a spacecraft (200) moving in outer space. The space robot control apparatus (1A) includes a parameter setter (14) to set, using second sensor information indicating a detection value of an internal state and an external environmental state of the spacecraft, a parameter for controlling the manipulator to perform the motion attenuation operation, an impulsive force model adjuster (15) to generate an impulsive force model defining an impulsive force generated when the manipulator performs the motion attenuation operation based on first sensor information indicating a detection value of an internal state of the manipulator, third sensor information indicating a detection value of an internal state and an external environmental state of the space robot, and the second sensor information, and a model predictive controller (16A) to generate, using the parameter and the impulsive force model, a joint torque command to be provided to joints in the manipulator to perform the motion attenuation operation, and to output the joint torque command to the manipulator.

## Description

### Technical Field

The present disclosure relates to a space robot control apparatus, a space robot, a space robot control method, and a program.

### Background Art

In outer space, to perform an operation on another spacecraft (hereafter also referred to as a target vehicle), a space robot (hereafter also referred to as a chaser) including a manipulator is to sufficiently attenuate the motion of the target vehicle.

As a device that operates in outer space, for example, that performs visual inspection of another artificial satellite or collects space debris including malfunctioned artificial satellites, Patent Literature 1 describes a device that operates a manipulator while reducing bounce from a touch on an ungrippable portion of a rescue satellite or a target vehicle when a space robot including an artificial satellite with the manipulator, or a chaser, is to grip the ungrippable portion with a fingertip of the manipulator.

Patent Literature 2 describes a contact mode estimator that detects an object colliding against a robot hand using a detection signal from a force sensor at a wrist of a robot, evaluates and distinguishes the collision with a particle filter, and calculates timing to close a gripper of the robot hand to capture the approaching object.

### Citation List

### Patent Literature

Patent Literature 1: Unexamined Japanese Patent Application Publication No. 2005-205551
Patent Literature 2: Unexamined Japanese Patent Application Publication No. 2019-198948

### Summary of Invention

### Technical Problem

However, the technique described in Patent Literature 1 uses a rescue satellite as a target vehicle cooperative with the chaser or having a very low relative angular velocity, and thus uses a contact force estimate from Kalman filtering allowing a phase lag based on detection values from sensors. However, a rescue satellite uncooperative or with a relative angular velocity normally has a rapid contact force. Thus, the phase lag in the Kalman filtering output cannot be neglected, and the contact force estimate contains an error. Thus, after the touch, the chaser may unintendedly accelerate or shoot the rescue satellite, and fail to sufficiently attenuate the motion of the rescue satellite. Compliance control also uses the above contact force estimate as a target value. Thus, the chaser promotes the motion of a rescue satellite uncooperative or with a relative angular velocity with the contact force estimate error input as an excess force and torque, and cannot sufficiently attenuate the motion of the rescue satellite.

Similarly, the technique described in Patent Literature 2 can determine a contact mode when an object to be captured is cooperative or has a very low relative angular velocity. In contrast, to capture an object uncooperative or having a relative angular velocity, first, the satellite with the robot hand is to attenuate the relative angular velocity between the object and the robot hand. However, independently of when closing the robot hand with successive determination of the contact mode, the satellite with the robot hand is coupled with the motion of the object, and cannot sufficiently attenuate the motion of the object.

In response to the above issue, an objective of the present disclosure is to allow a chaser to easily attenuate the motion of a target vehicle sufficiently in outer space.

### Solution to Problem

To achieve the above objective, a space robot control apparatus according to an aspect of the present disclosure is a space robot control apparatus for controlling a space robot. The space robot is a robot to perform a motion attenuation operation to attenuate, with a manipulator, a motion of a spacecraft moving in outer space. The space robot control apparatus acquires first sensor information indicating a detection value from a first sensor that detects an internal state of the manipulator, acquires third sensor information indicating a detection value from a third sensor that detects an internal state and an external environmental state of the space robot, and acquires second sensor information indicating a detection value from a second sensor that detects an internal state and an external environmental state of the spacecraft. The space robot control apparatus includes a parameter setter, an impulsive force model adjuster, and a model predictive controller. The parameter setter sets, using the second sensor information, a parameter for controlling the manipulator to perform the motion attenuation operation. The impulsive force model adjuster generates an impulsive force model defining an impulsive force resulting from a contact of an end-effector in the manipulator against the spacecraft when the manipulator performs the motion attenuation operation based on the first sensor information, the third sensor information, and the second sensor information. The model predictive controller generates, using the parameter set by the parameter setter and the impulsive force model generated by the impulsive force model adjuster, a joint torque command to be provided to joints in the manipulator to perform the motion attenuation operation, and to output the joint torque command to an actuator that drives the joints in the manipulator.

### Advantageous Effects of Invention

With the technique according to the above aspect of the present disclosure, a joint torque command for the manipulator can control a friction force or an orthogonal component of an impulsive force resulting from a contact of the end-effector in the manipulator with a spacecraft. The technique thus allows a chaser to easily attenuate the motion of a target vehicle sufficiently in outer space.

### Brief Description of Drawings

FIG. 1 is a block diagram of a space robot according to Embodiment 1;
FIG. 2 is a diagram of an example impulsive force model in Embodiment 1;
FIG. 3 is a functional block diagram of a model predictive controller in Embodiment 1;
FIG. 4 is a diagram of a simple mathematical model of a chaser and a target vehicle, with the motion limited to a two-dimensional motion in Embodiment 1;
FIG. 5A is a graph of a joint torque command for a manipulator in time series;
FIG. 5B is a graph of the angular velocity of a target vehicle in time series when the joint torque command for the manipulator in FIG. 5A is output;
FIG. 6 is a flowchart of a space robot control process in Embodiment 1;
FIG. 7 is a block diagram of a space robot according to Embodiment 2;
FIG. 8 is a flowchart of a switching process in Embodiment 2;
FIG. 9 is a block diagram of a space robot according to Embodiment 3;
FIG. 10 is a functional block diagram of a model predictive controller in Embodiment 3;
FIG. 11 is a block diagram of a space robot according to Embodiment 4;
FIG. 12 is a flowchart of a switching process in Embodiment 4; and
FIG. 13 is a diagram of a space robot control apparatus according to Embodiments 1 to 4, illustrating the hardware configuration.

### Description of Embodiments

A space robot control apparatus, a space robot, a space robot control method, and a program according to one or more embodiments are described in detail below with reference to the drawings. Like reference signs denote like or corresponding components in the drawings. In the embodiments described below, a chaser is a space robot including a manipulator having multiple active joints, and a target vehicle is a spacecraft on which the chaser performs an operation with the manipulator in outer space.

### Embodiment 1

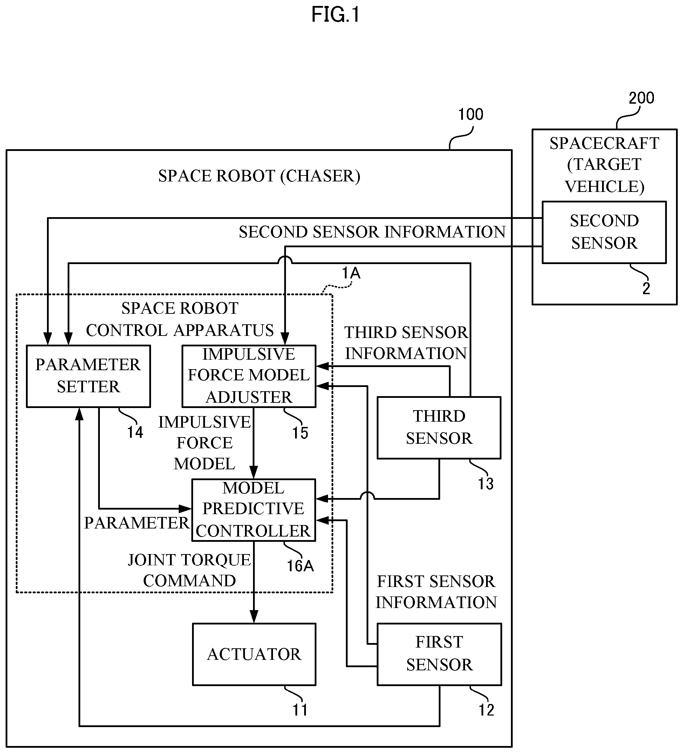

As illustrated in FIG. 1, a space robot 100 according to Embodiment 1 includes an actuator 11 that drives the joints in a mounted manipulator (not illustrated), a first sensor 12 including an internal sensor such as an encoder or a potentiometer that detects the internal state of the actuator 11, such as rotational displacement or translational displacement, a third sensor 13 including an internal sensor, such as an inclinometer or a gyro, that detects the internal state of the space robot 100, such as a position or an attitude, and an external sensor, such as a camera or a laser range finder, that detects the external environmental state of the space robot 100, and a space robot control apparatus 1A that controls the actuator 11.

The space robot 100 serving as a chaser places a fingertip (hereafter also referred to as an end-effector) of the manipulator in contact with a spacecraft 200 serving as a target vehicle to provide an impulsive force to the spacecraft 200, causes an appropriate friction force accompanying the impulsive force, and attenuates the motion of the target vehicle. The operation performed by the chaser to attenuate the motion of the target vehicle is hereafter referred to as a motion attenuation operation.

The space robot control apparatus 1A acquires first sensor information indicating detection values from the first sensor 12, and third sensor information indicating detection values from the third sensor 13.

The spacecraft 200 includes a second sensor 2. The second sensor 2 includes at least an internal sensor that detects the internal state of the spacecraft 200 or an external sensor that detects the external environmental state of the spacecraft 200. The second sensor information indicating the detection value from the second sensor can be shared in communication between the space robot 100 and the spacecraft 200. When the spacecraft 200 includes no second sensor 2, the space robot control apparatus 1A may use third sensor information indicating a detection value from the third sensor 13 included in the space robot 100, instead of the second sensor information.

The functional components of the space robot control apparatus 1A are described in detail. The space robot control apparatus 1A includes a parameter setter 14 that sets parameters for controlling the manipulator in performing the motion attenuation operation, an impulsive force model adjuster 15 that generates, when the manipulator performs the motion attenuation operation, an impulsive force model serving as a model of an impulsive force caused when the end-effector comes in contact with the target vehicle, and a model predictive controller 16A that generates and outputs, using the parameters set by the parameter setter 14 and the model generated by the impulsive force model adjuster 15, a joint torque command to be provided to the joints in the manipulator to perform the motion attenuation operation.

Rotational displacement, or a rotation angle is described below as displacement of the actuator 11 for convenience, but such displacement may be any displacement. For example, when the actuator included in the manipulator moves linearly, the displacement is naturally translational displacement.

The parameter setter 14 stores initial values and terminal values of the position, the velocity, the attitude angle, and the angular velocity of the chaser, initial values and terminal values of the j oint angle and the j oint angular velocity of the manipulator, and initial values and terminal values of the position, the attitude angle, the velocity, and the angular velocity of the end-effector during the motion attenuation operation. The group of these initial values may be calculated from the third sensor information and the first sensor information. The parameter setter 14 further stores terminal values of the position, the velocity, the attitude angle, and the angular velocity of the target vehicle during the motion attenuation operation. The center of gravity and initial values of the position, the velocity, the attitude angle, and the angular velocity of the target vehicle during the motion attenuation operation are acquired from the second sensor information. Alternatively, the parameter setter 14 may calculate, from the third sensor information, the center of gravity and initial values of the position, the velocity, the attitude angle, and the angular velocity of the target vehicle during the motion attenuation operation.

Instead of the velocity and the angular velocity of the chaser, the parameter setter 14 may store initial values and terminal values of the acceleration and the angular acceleration of the chaser during the motion attenuation operation. Instead of the joint angular velocity of the manipulator and the velocity and the angular velocity of the end-effector, the parameter setter 14 may store the joint angle acceleration of the manipulator and initial values and terminal values of the acceleration and the angular acceleration of the end-effector during the motion attenuation operation. The group of these initial values may be calculated from the third sensor information and the first sensor information. Instead of the position, the velocity, the attitude angle, and the angular velocity of the target vehicle, the parameter setter 14 may store terminal values of the acceleration and the angular acceleration of the target vehicle during the motion attenuation operation. The parameter setter 14 may acquire the center of gravity and initial values of the acceleration and the angular acceleration of the target vehicle during the motion attenuation operation from the second sensor information, or calculate the center of gravity and the initial values from the third sensor information.

The parameter setter 14 outputs the above values to the model predictive controller 16A as parameters. The parameter setter 14 may output a target trajectory of the end-effector determined based on these values to the model predictive controller 16A as one parameter.

The impulsive force model adjuster 15 is described below. The impulsive force model adjuster 15 acquires the actual position and the actual attitude angle of the space robot 100 (chaser) from the third sensor information, the actual joint angle of the manipulator from the first sensor information, and the actual position, the actual attitude angle, and the actual angular velocity of the spacecraft 200 (target vehicle) from the second sensor information. The impulsive force model adjuster 15 may calculate the actual position, the actual attitude angle, and the actual angular velocity of the spacecraft 200 (target vehicle) from the third sensor information. The impulsive force model adjuster 15 generates the impulsive force model based on these values. The impulsive force model is a function or a map. The impulsive force model adjuster 15 outputs the impulsive force model to the model predictive controller 16A.

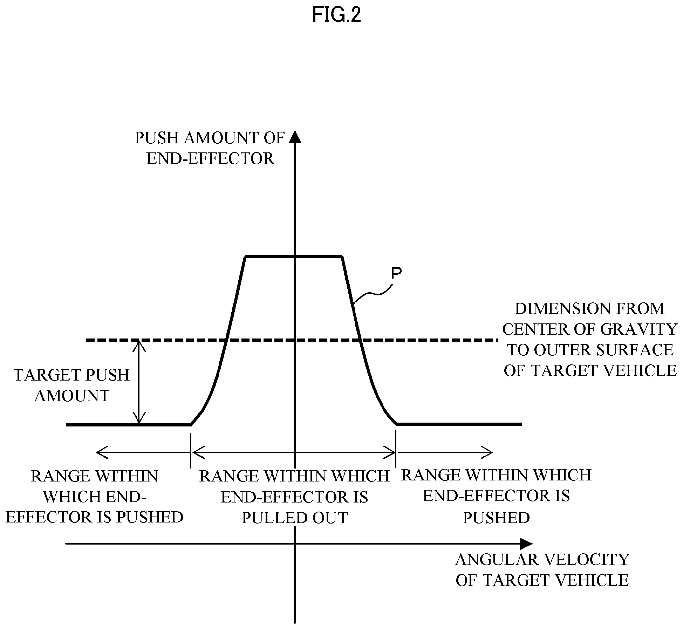

An impulsive force model is described with reference to FIG. 2. FIG. 2 illustrates an example impulsive force model. In the graph in FIG. 2, the horizontal axis indicates the angular velocity of the spacecraft 200 (target vehicle), and the vertical axis indicates the push amount of the end-effector against the outer surface of the spacecraft 200 (target vehicle). The broken line in FIG. 2 denotes the dimension from the center of gravity to the outer surface of the spacecraft 200 (target vehicle). A profile P in FIG. 2 indicates the impulsive force model.

Before the motion attenuation operation, the space robot 100 (chaser) approaches a range within which the end-effector reaches the outer surface of the spacecraft 200 (target vehicle). The space robot 100 (chaser) acquires the actual position and the actual attitude angle of the end-effector from the first sensor information. The space robot 100 (chaser) acquires the actual position and the actual attitude angle of the spacecraft 200 (target vehicle) from the second sensor information. Based on the difference, or in other words, the relative position between the actual position of the end-effector and the actual position of the spacecraft 200 (target vehicle), the space robot 100 (chaser) approaches the range within which the end-effector reaches the outer surface of the spacecraft 200 (target vehicle). This approach may be performed also using the difference, or in other words, the relative angle between the actual attitude of the end-effector and the actual attitude of the spacecraft 200 (target vehicle).

The space robot 100 (chaser) may calculate the relative position and the relative angle between the end-effector and the spacecraft 200 (target vehicle) by relative navigation using the third sensor information from, for example, a camera or a laser finder in the third sensor.

The push amount of the end-effector after the approach is defined by the impulsive force model. More specifically, the impulsive force model adjuster 15 determines a contact parameter associated with a push and a pullout of the end-effector based on the angular velocity of the spacecraft 200 (target vehicle), and generates the impulsive force model. An angular velocity range within which the end-effector is pushed and an angular velocity range within which the end-effector is pulled out are contact parameters. The difference between the profile indicating the range within which the end-effector is pushed and the broken line indicating the dimension from the center of gravity to the outer surface of the target vehicle illustrated in FIG. 2 is a target push amount, and is a contact parameter. The center of gravity of the target vehicle and the dimension from the center of gravity to the outer surface of the target vehicle may be acquired from the second sensor information, or calculated as an estimate based on the third sensor information with signal processing and image processing.

A physical phenomenon resulting from the contact between the end-effector and the outer surface of the target vehicle is defined by a spring constant, a viscous damping coefficient, and a coefficient of friction. The spring constant, the viscous damping coefficient, and the coefficient of friction are contact parameters. The spring constant, the viscous damping coefficient, and the coefficient of friction are determined based on, for example, materials of the end-effector and the outer surface of the target vehicle. The impulsive force of the end-effector using the contact parameters can be formulated as, for example, a parallel connection component of a spring force component and a viscous damping force component. The spring force component is expressed as a product of the push amount and the spring constant. The viscous damping force component is expressed as a product of a time derivative of the push amount and a viscous damping coefficient. For example, the impulsive force is a normal force against the target vehicle, and thus the friction force can be formulated as a component acquired by multiplying the orthogonal component of the impulsive force by the coefficient of friction.

More specifically, based on the angular velocity of the spacecraft 200 (target vehicle), the impulsive force model defines a section distinction between the push operation and the pullout operation of the end-effector to sufficiently attenuate the motion and the push amount in each section. The use of the impulsive force model allows the end-effector to perform an appropriate motion attenuation operation including a pullout of the end-effector after sufficient attenuation of the spacecraft 200 (target vehicle) without an excess push toward the spacecraft 200 (target vehicle) in motion.

The impulsive force model may be in any form, and may be, for example, a combination of smooth functions such as sigmoid functions, a linear or nonlinear function for each section of the push operation and the pullout operation, or a map.

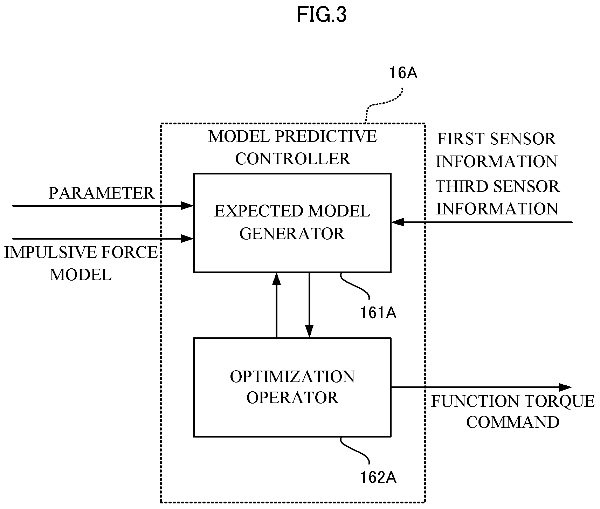

The model predictive controller 16A is described below with reference to FIG. 3. The model predictive controller 16A includes an expected model generator 161A and an optimization operator 162A that repeatedly perform calculations to output a joint torque command for each active joint in the manipulator.

The expected model generator 161A and the optimization operator 162A perform calculations to output a joint torque command for each active joint in the manipulator based on the parameter, the first sensor information, and the third sensor information, and parameters received from the parameter setter 14, and the impulsive force model (function or map) received from the impulsive force model adjuster 15.

More specifically, the expected model generator 161A stores an equation of motion or an equation of state expressing a dynamic behavior between the space robot 100 (chaser) and the spacecraft 200 (target vehicle), and a performance index and a constraint to be satisfied in the process of the behavior.

Examples of the constraint include an inequality constraint expressed by an inequality, such as a restriction on the torque, the angular velocity, or the angle of the actuator 11 in each active joint in the manipulator within a predetermined limiting value.

A typical example performance index is the sum of the terminal cost and the stage cost. The terminal cost is a difference between the actual state of the behavior in the final state or the terminal state and the terminal value in the parameter setter 14, formed into a quadratic form with a weighting matrix. The stage cost is the sum of the variable of state of the joint angle of the manipulator changing every moment, formed into a quadratic form with a weighting matrix, and a control input or the joint torque at that time, formed into a quadratic form with a weighting matrix. Instead of the quadratic form, another function that evaluates the dynamic behavior between the space robot 100 (chaser) and the spacecraft 200 (target vehicle) may be set as a performance index.

The optimization operator 162A calculates a control input that minimizes the performance index while satisfying the constraint to implement the terminal state between the space robot 100 (chaser) and the spacecraft 200 (target vehicle) using the equation of motion or the equation of state, the predetermined constraint, and the performance index stored in the expected model generator 161A. The widely known continuation generalized minimal residual method (C/GMRES) may be used as an example of an algorithm used in the optimization operator 162A.

Basic values associated with an equation of motion or an equation of state expressing a dynamic behavior between the space robot 100 (chaser) and the spacecraft 200 (target vehicle) are described below. A control input is joint torque in the actuator 11 included in each active joint in the manipulator. The variable of state includes the position, the attitude angle, the velocity, and the angular velocity of the space robot 100 (chaser), the joint angle and the joint angular velocity of each joint in the manipulator included in the space robot 100 (chaser), and the position, the velocity, the attitude angle, and the angular velocity of the spacecraft 200 (target vehicle). Although all the variables of state are observable, the values of the spacecraft 200 (target vehicle), or more specifically, the position, the velocity, the attitude angle, and the angular velocity may be acquired from the second sensor information or estimated based on the third sensor information.

The impulsive force model (function or map) received from the impulsive force model adjuster 15 is an operator that operates on disturbance, acquired by mathematically expressing, based on the contact parameter, the impulsive force in a direction in which the end-effector is pushed toward the spacecraft 200 (target vehicle) and the friction force defined by the orthogonal component of the impulsive force. More specifically, the impulsive force model is reflected in a performance index.

The model predictive controller 16A solves the time series of the control input that minimizes the performance index for each of time sections into which a specific time section (hereafter also referred to as a horizon) is divided. The solution of the horizon is acquired through repeated calculations within a predetermined control period set for the expected model generator 161A and the optimization operator 162A, and a first input of an initial value of each section of the horizon is output as a joint torque command from the optimization operator 162A to the actuator 11.

Thus, the friction force or the orthogonal component of the impulsive force produced by pushing the end-effector in the chaser against the target vehicle can be appropriately produced by the joint torque command for the manipulator. The motion of the moving target vehicle can thus be attenuated. The push and the pullout of the end-effector are determined based on the angular velocity of the target vehicle. This technique reduces an excess push against the target vehicle and is less likely to promote the motion of the target vehicle.

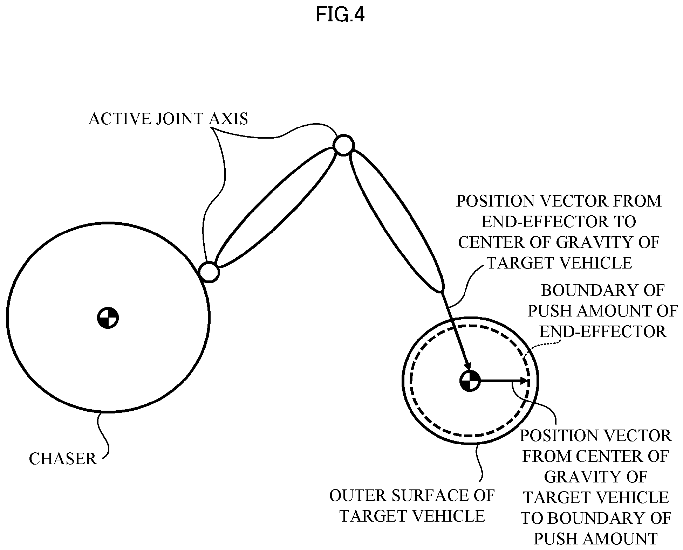

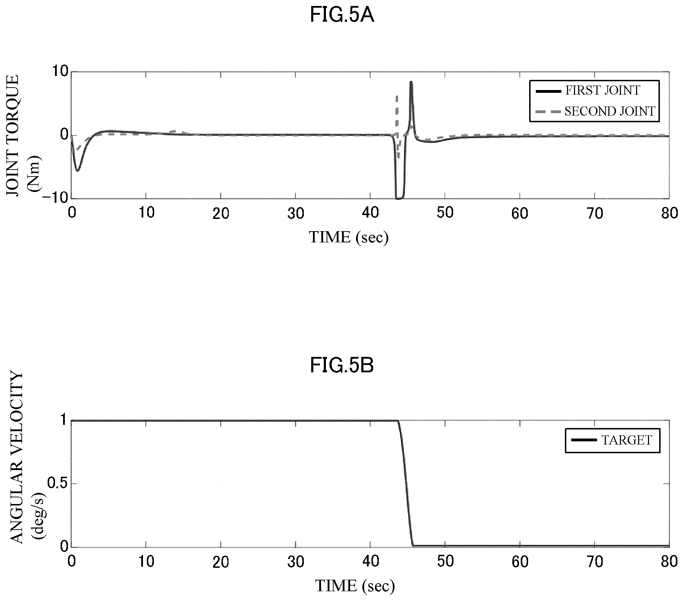

A simple example numerical value of an appropriate friction force produced by pushing the end-effector in the chaser according to Embodiment 1 against the target vehicle that attenuates the rotary motion of the target vehicle is described with reference to FIGS. 4, 5A, and 5B.

FIG. 4 illustrates a simple mathematical model of the chaser and the target vehicle with the motion limited to the two-dimensional motion as an example of a specific effect. The chaser includes a two-link active joint manipulator having two links and active joint axes that drive these links. For ease of understanding, the target vehicle has a simple shape with a spherical outer surface, and rotates about the center of gravity of the target vehicle at a fixed angular velocity. To attenuate the motion of the target vehicle rotating at the fixed angular velocity, the space robot control apparatus 1A calculates a joint torque command to produce an appropriate friction force with the impulsive force of the end-effector, and outputs the joint torque command to the actuator 11.

As illustrated in FIG. 4, the direction of the impulsive force applied by the end-effector to the target vehicle is the direction of a position vector from the end-effector to the center of gravity of the target vehicle. A boundary of the push amount of the end-effector against the target vehicle is drawn with a broken line inward from the outer surface of the target vehicle.

FIG. 5A illustrates a time series of the joint torque command for each portion of the manipulator when an example numerical simulation to attenuate the motion of the target vehicle rotating at a fixed angular velocity is performed based on the mathematical model illustrated in FIG. 4. FIG. 5B illustrates a time-series change of the angular velocity of the target vehicle at that time. In the example in FIGS. 5A and 5B, the manipulator has a first joint and a second joint. The mass of the chaser including the manipulator is 2100 kg, and the mass of the target vehicle is 200 kg. The upper and lower limits ± 10 Nm of the joint torque for the first joint and the second joint in the manipulator are set as constraints. The initial angular velocity of the target vehicle is 1.0 deg/s. The chaser has approached a range within which the end-effector reaches the target vehicle.

FIG. 5A is a graph of the joint torque command for the manipulator in time series. In the drawing, the command for the first joint in the chaser is drawn with a solid line, and the command for the second joint is drawn with a broken line. FIG. 5B is a graph of the angular velocity of the target vehicle in times series when the joint torque command for the manipulator in FIG. 5A is output. The joint torque command and the actual joint torque are the same when the transfer function of a torque control system (not illustrated) is determined as 1.

In the graph in FIG. 5A, the end-effector in the manipulator approaches the outer surface of the target vehicle from the initial time 0 sec to 43.6 sec, and outputs a steep joint torque command when coming in contact with the outer surface immediately after the approach, and the joint torque command then drops to 0 Nm. In the graph in FIG. 5B, after a steep joint torque command illustrated in the graph in FIG. 5A is output, the motion of the target vehicle is attenuated from the initial angular velocity of 1 deg/s to 0.008 deg/s.

In this numerical simulation, the angular velocity of the target vehicle is attenuated to the 0.008 deg/s with an impulsive force of one collision. To further attenuate the angular velocity of the target vehicle closer to 0 deg/s, the above motion attenuation operation may be repeatedly performed. When the target vehicle moves away to the range in which the end-effector cannot reach the target vehicle, the motion attenuation operation may be performed in the same manner after the chaser approaches the target vehicle again.

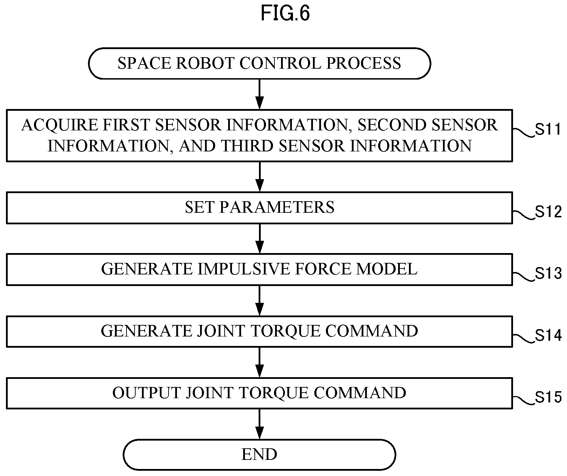

A space robot control process performed by the space robot control apparatus 1A is described with reference to the flowchart in FIG. 6. The space robot control process is started when the space robot 100 starts the motion attenuation operation. The space robot control apparatus 1A acquires first sensor information, second sensor information, and third sensor information (step S11).

Using the first sensor information, the third sensor information, and the second sensor information, the parameter setter 14 sets parameters for controlling the manipulator for performing the motion attenuation operation (step S12). Based on the first sensor information, the third sensor information, and the second sensor information, the impulsive force model adjuster 15 generates an impulsive force model that defines the impulsive force to be produced when the end-effector in the manipulator comes in contact with the spacecraft to perform the motion attenuation operation (step S13).

Using the set parameters and the generated impulsive force model, the model predictive controller 16A generates a joint torque command to be provided to the joints in the manipulator that performs the motion attenuation operation (step S14). The model predictive controller 16A outputs the generated joint torque command to the actuators that drive the joints in the manipulator (step S15), and ends the process. In step S14, the model predictive controller 16A solves the time series of the control input that minimizes the performance index for each of time sections into which a fixed time section (horizon) is divided, and the solution is acquired by performing repeated calculations within a predetermined control period set for the expected model generator 161A and the optimization operator 162A, and a first input of an initial value of each section of the horizon is generated as the joint torque command.

In Embodiment 1, the friction force or an orthogonal component of the impulsive force produced by pushing the end-effector in the chaser against the target vehicle can be controlled with the joint torque command for the manipulator. The push and the pullout of the end-effector are determined based on the angular velocity of the target vehicle. This technique reduces an excess push against the target vehicle and is less likely to promote the motion of the target vehicle. Thus, the chaser facilitates sufficient attenuation of the motion of the target vehicle in outer space.

### Embodiment 2

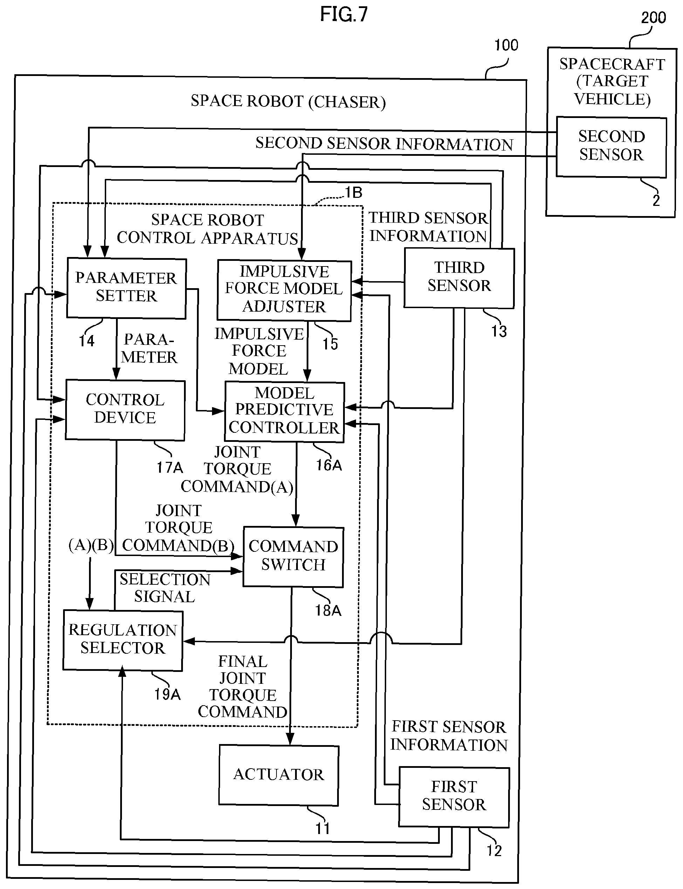

FIG. 7 is a block diagram of a space robot 100 according to Embodiment 2. In Embodiment 2, the space robot 100 includes a space robot control apparatus 1B in place of the space robot control apparatus 1A. Of the functional components in the space robot control apparatus 1B, the impulsive force model adjuster 15 and the model predictive controller 16A are the same as those in the space robot control apparatus 1A according to Embodiment 1, and thus are not described.

In addition to the parameter setter 14, the impulsive force model adjuster 15, and the model predictive controller 16A, the space robot control apparatus 1B includes a control device 17A, a command switch 18A, and a regulation selector 19A. The control device 17A generates a joint torque command to cause the actual position and the actual attitude of the end-effector to follow a target position and a target attitude. The command switch 18A switches between the control device 17A and the model predictive controller 16A. The regulation selector 19A determines whether to select the control device 17A or the model predictive controller 16A. Inputs into and outputs from, and the operations of the parameter setter 14, the control device 17A, the command switch 18A, and the regulation selector 19A are described below.

In Embodiment 2, after the motion of the target vehicle is attenuated by the motion attenuation operation described in Embodiment 1, the chaser performs an operation on the target vehicle. Examples of the operation performed on the target vehicle include visual inspection, capture, repair, and refueling.

In addition to the functions in Embodiment 1, the parameter setter 14 stores the initial values and the terminal values of the position, the velocity, the attitude angle, and the angular velocity of the chaser during the operation on the target vehicle, the initial values and terminal values of the joint angle and the joint angular velocity of the manipulator, and the initial values and the terminal values of the position, the attitude angle, the velocity, and the angular velocity of the end-effector. A group of these initial values may be calculated from the third sensor information and the first sensor information, and a group of these terminal values may be determined based on the above group of initial values. In addition, the parameter setter 14 stores the terminal values of the position, the velocity, the attitude angle, and the angular velocity of the target vehicle during the operation on the target vehicle. A group of these terminal values may be determined based on the group of initial values and a center of gravity described later. The center of gravity and the initial values of the position, the velocity, the attitude angle, and the angular velocity of the target vehicle during the operation on the target vehicle are acquired from the second sensor information. Alternatively, the parameter setter 14 may calculate the center of gravity and the initial values of the position, the velocity, the attitude angle, and the angular velocity of the target vehicle during the operation on the target vehicle from the third sensor information.

Instead of the velocity and the angular velocity of the chaser, the parameter setter 14 may store the initial values and the terminal values of the acceleration and the angular acceleration of the chaser during the operation on the target vehicle. Instead of the joint angular velocity of the manipulator and the velocity and the angular velocity of the end-effector, the parameter setter 14 may store the initial values and the terminal values of the joint angle acceleration of the manipulator and the acceleration and the angular acceleration of the end-effector during the operation on the target vehicle. Instead, a group of these initial values may be calculated from the third sensor information and the first sensor information, and a group of these terminal values may be determined based on the above group of initial values. Instead of the position, the velocity, the attitude angle, and the angular velocity of the target vehicle, the parameter setter 14 may store the terminal values of the acceleration and the angular acceleration of the target vehicle during the operation on the target vehicle. The group of these terminal values may be determined based on the group of initial values and the center of gravity described later. The parameter setter 14 may acquire the center of gravity and the initial values of the acceleration and the angular acceleration of the target vehicle during the operation on the target vehicle from the second sensor information or may calculate the center of gravity and the initial values from the third sensor information.

The parameter setter 14 outputs the values in the motion attenuation operation as parameters to the model predictive controller 16A, and outputs the values during the operation on the target vehicle as parameters to the control device 17A. The parameter setter 14 may output the target trajectory of the end-effector determined based on the above values as a parameter to the model predictive controller 16A and the control device 17A.

The control device 17A receives the parameters output from the parameter setter 14, the first sensor information, and the third sensor information.

More specifically, using, as an input, the target trajectory of the end-effector during the operation on the target vehicle among the parameters output from the parameter setter 14 or the target trajectory of the end-effector calculated from the parameters output from the parameter setter 14, or more specifically, the target position and the target attitude of the end-effector relative to the target vehicle, the control device 17A calculates a joint torque command to cause the actual position and the actual attitude of the end-effector calculated from the first sensor information and the third sensor information to follow the target position and the target attitude of the operation on the target vehicle, and outputs the joint torque command. The control device 17A performs known proportional-integral-derivative (PID) control including a combination of proportional control, integral control, and derivative control using, for example, a deviation between the target position and the actual position and a deviation between the target attitude and the actual attitude. The control device 17A may perform any type of PID control such as PI-D control or I-PD control.

Before performing an operation on the target vehicle, the chaser is to complete the motion attenuation operation to sufficiently attenuate the motion of the target vehicle. After the completion of the motion attenuation operation, the chaser proceeds to the operation on the target vehicle.

The regulation selector 19A receives a joint torque command (A) output from the model predictive controller 16A, a joint torque command (B) output from the control device 17A, and at least the third sensor information, and outputs a selection signal selecting one of the model predictive controller 16A or the control device 17A to the command switch 18A.

After the third sensor information detects attenuation of the motion of the target vehicle to or below a predetermined threshold in accordance with the joint torque command (A) output from the model predictive controller 16A, the regulation selector 19A outputs, to the command switch 18A, a selection signal indicating a switch to the control device 17A. A condition that the angular velocity of the target vehicle is attenuated to or below a threshold is hereafter referred to as switch condition 1.

The determination as to whether the regulation selector 19A is to switch from the model predictive controller 16A to the control device 17A may be performed based on a sign of a time series of the joint torque command (A) from the model predictive controller 16A and the joint torque command (B) from the control device 17A or comparison between the joint torque command (A) and the joint torque command (B). The model predictive controller 16A includes the expected model generator 161A and the optimization operator 162A that perform repeated calculations. During calculations in a predetermined control period, the optimization of the performance index resulting from the repeated calculations within the control period may fail to be completed, and an abnormal joint torque command (A) not satisfying the constraint may be output. When the abnormal joint torque command (A) is output, the end-effector in the manipulator may perform an unexpected operation. Thus, when an abnormality (for example, a sign of failure to satisfy the constraint, or a sign of superimposition of a continuous frequency component exceeding the resonance frequency of the manipulator on the time series of the joint torque command) of the joint torque command (A) is detected, a selection signal indicating a switch from the model predictive controller 16A to the control device 17A is output to the command switch 18A. In this case, the control device 17A continues to perform the motion attenuation operation on the target vehicle. A condition that an abnormality of the joint torque command (A) is detected is hereafter referred to as switch condition 2.

In addition, when the angular velocity of the target vehicle remains without being sufficiently attenuated independently of the control device 17A continuously performing the motion attenuation operation on the target vehicle, the space robot control apparatus 1B may perform the motion attenuation operation on the target vehicle with known compliance control to cause the end-effector to produce an appropriate friction force based on a detection value from a force sensor at the manipulator wrist. The detection value is included in the first sensor information. Alternatively, the regulation selector 19A may output a selection signal indicating a switch to the model predictive controller 16A to the command switch 18A when the joint torque command (A) output from the model predictive controller 16A cannot satisfy switch condition 2, or in other words, when the joint torque command (A) returns to the normal state.

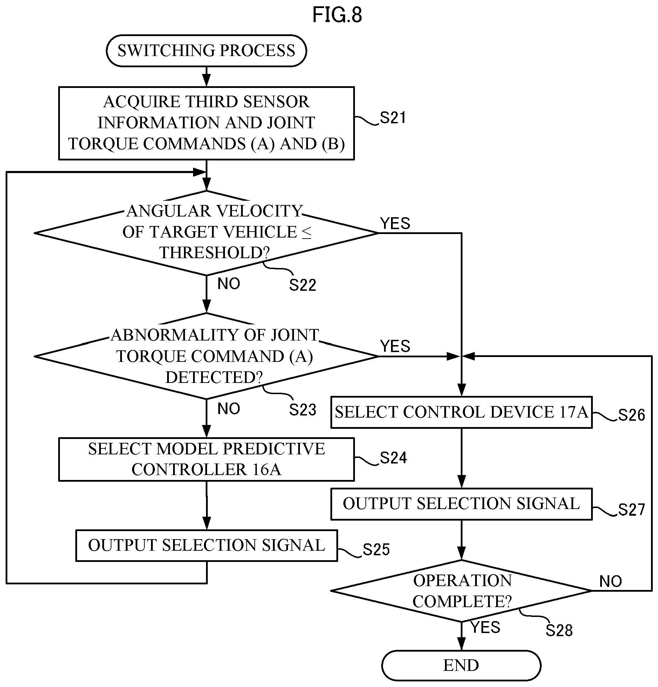

The switching process to determine whether the regulation selector 19A is to select one of the model predictive controller 16A or the control device 17A is described with reference to the flowchart in FIG. 8. The switching process is started when the space robot 100 starts the motion attenuation operation. The regulation selector 19A acquires the third sensor information, the joint torque command (A) output from the model predictive controller 16A, and the joint torque command (B) output from the control device 17A (step S21).

The regulation selector 19A determines whether the angular velocity of the target vehicle detected from or estimated with the third sensor information is lower than or equal to a predetermined threshold (step S22). Step S22 corresponds to switch condition 1. When the angular velocity of the target vehicle is not lower than or equal to the threshold (NO in step S22), the regulation selector 19A determines whether any abnormality of the joint torque command (A) output from the model predictive controller 16A is detected (step S23). Step S23 corresponds to switch condition 2.

When an abnormality of the joint torque command (A) is detected (YES in step S23), the processing advances to step S26. When no abnormality of the joint torque command (A) is detected (NO in step S23), the regulation selector 19A selects the model predictive controller 16A (step S24). The regulation selector 19A outputs a selection signal indicating a switch to the model predictive controller 16A to the command switch 18A (step S25). The processing returns to step S22, and steps S22 to S25 are repeated.

When the angular velocity of the target vehicle is lower than or equal to a threshold (YES in step S22), the regulation selector 19A selects the control device 17A (step S26). The regulation selector 19A outputs a selection signal indicating a switch to the control device 17A to the command switch 18A (step S27). When the operation on the target vehicle has not been complete (NO in step S28), the processing returns to step S26, and steps S26 to S28 are repeated. When the operation on the target vehicle is complete (YES in step S28), the processing ends.

In a structure in which the motion attenuation operation is performed on the target vehicle with compliance control when the angular velocity of the target vehicle remains without being sufficiently attenuated independently of the control device 17A continuously performing the motion attenuation operation on the target vehicle, a step of determining whether the angular velocity of the target vehicle is lower than or equal to a threshold is further added after step S27, and another step of performing the motion attenuation operation on the target vehicle with compliance control is further added when the angular velocity of the target vehicle is not lower than or equal to the threshold. In the step of performing the motion attenuation operation on the target vehicle with compliance control, the motion attenuation operation is continuously performed until the angular velocity of the target vehicle reaches or falls below the threshold.

In a structure including a switch to the model predictive controller 16A when the joint torque command (A) output from the model predictive controller 16A returns to the normal state, a step of determining whether the angular velocity of the target vehicle is lower than or equal to the threshold is further added after step S27. When the angular velocity of the target vehicle is not lower than or equal to the threshold, the processing returns to step S23.

In step S22, the determination as to whether the angular velocity of the target vehicle detected from or estimated with the third sensor information is lower than or equal to a predetermined threshold is performed. Instead, when the second sensor information can be acquired, the determination as to whether the angular velocity of the target vehicle is lower than or equal to a predetermined threshold may be performed based on the second sensor information.

In step S21, the first sensor information may also be acquired to monitor the actuator for any abnormal operation or to monitor the fingertip position or the attitude calculatable with the third sensor information for any abnormal operation.

This switching process allows setting of a regulation appropriate for attenuating the motion of the target vehicle with the model predictive controller 16A, and then precisely controlling the fingertip position or the attitude with another controller. When an output from the model predictive controller 16A has an abnormality, the controller may be switched to another controller to continue the motion attenuation operation.

Referring back to FIG. 7, the command switch 18A receives a selection signal output from the regulation selector 19A, a joint torque command (A) output from the model predictive controller 16A, and a joint torque command (B) output from the control device 17A, and outputs a final joint torque command to the actuator 11.

One of the joint torque command (A) or the joint torque command (B) is selected by the selection signal output from the regulation selector 19A. When the difference between the joint torque command (A) and the joint torque command (B) is less than or equal to a threshold, the command switch 18A performs switching instantly. When the difference between the joint torque command (A) and the joint torque command (B) is greater than the threshold, the command switch 18A performs switching gradually through a bandpass filter. For example, a known low-pass filter or a moving average filter is used as the bandpass filter. This technique can reduce discontinuous changes in the final joint torque command, and reduce the instability of the control system.

In Embodiment 2 described above, when the chaser performs a series of operations including the motion attenuation operation and an operation on the target vehicle having the motion sufficiently attenuated, regulations appropriate for the corresponding operations are switched to improve the usability of the operation of the space robot within a range from rough control of attenuating the motion of the target vehicle to precise control of performing an operation on the target vehicle having the motion sufficiently attenuated, such as visual inspection, repair, assembly, and refueling.

### Embodiment 3

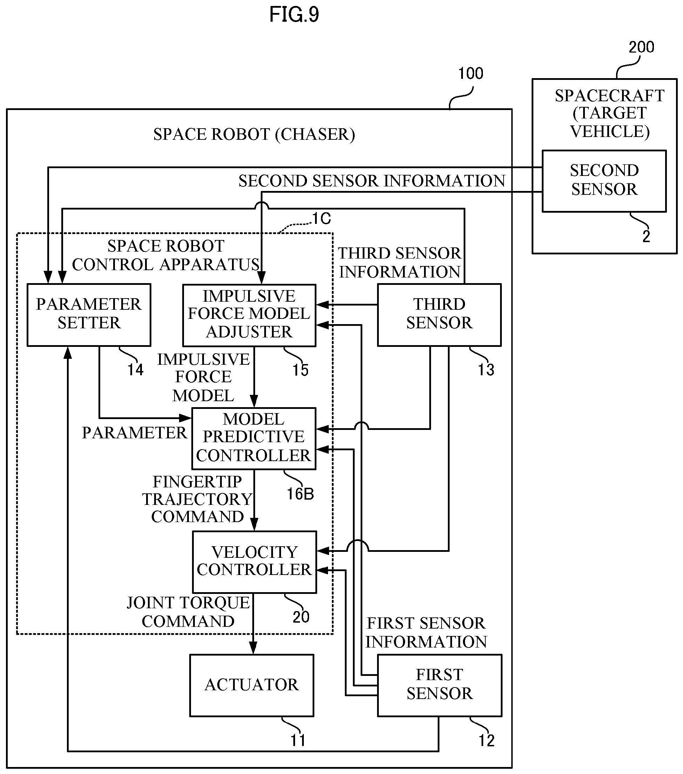

FIG. 9 is a block diagram of a space robot 100 according to Embodiment 3. In Embodiment 3, the space robot 100 includes a space robot control apparatus 1C in place of the space robot control apparatus 1A. Of the functional components in the space robot control apparatus 1C, the parameter setter 14 and the impulsive force model adjuster 15 have the same functions as in Embodiment 1, and thus are not described.

In addition to the parameter setter 14 and the impulsive force model adjuster 15, the space robot control apparatus 1C includes a model predictive controller 16B and a velocity controller 20. The model predictive controller 16B generates a fingertip trajectory command to be provided to the end-effector in the manipulator when performing the motion attenuation operation. The velocity controller 20 generates a joint torque command to cause the actual position and the actual attitude of the chaser and the actual position and the actual attitude of the end-effector to follow the fingertip trajectory command. Inputs into and outputs from the model predictive controller 16B and the velocity controller 20 and the operations of the model predictive controller 16B and the velocity controller 20 are described below.

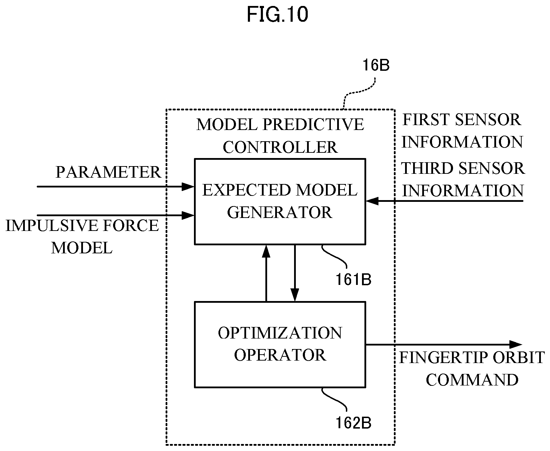

The model predictive controller 16B is described first with reference to FIG. 10. The model predictive controller 16B includes an expected model generator 161B and an optimization operator 162B that repeatedly perform calculations to output a fingertip trajectory command including the end-effector position and the end-effector attitude in the manipulator.

The expected model generator 161B and the optimization operator 162B perform calculations to output the fingertip trajectory command including the end-effector position and the end-effector attitude of the end-effector in the manipulator based on the parameter received from the parameter setter 14, the first sensor information, the third sensor information, and the impulsive force model (function or map) received from the impulsive force model adjuster 15.

More specifically, the expected model generator 161B stores an equation of motion or an equation of state expressing a dynamic behavior between the space robot 100 (chaser) and the spacecraft 200 (target vehicle), and a performance index and a constraint to be satisfied in the process of the behavior.

Examples of constraints include an inequality constraint expressed with an inequality, such as restrictions on the fingertip velocity, the fingertip angular velocity, the fingertip position, or the fingertip attitude of the end-effector in the manipulator within a predetermined limiting value.

A typical example of the performance index is the sum of the terminal cost and the stage cost. The terminal cost is a difference between the actual state of the behavior in the final state or the terminal state and the terminal value in the parameter setter 14, formed into a quadratic form with a weighting matrix. The stage cost is the sum of the variable of state of the joint angle of the manipulator changing every moment, formed into a quadratic form with a weighting matrix, and a control input or the joint torque at that time, formed into a quadratic form with a weighting matrix. Instead of the quadratic form, another function that evaluates the dynamic behavior between the space robot 100 (chaser) and the spacecraft 200 (target vehicle) may be set as a performance index.

The optimization operator 162B calculates a control input that minimizes the performance index while satisfying the constraint to implement the terminal state between the space robot 100 (chaser) and the spacecraft 200 (target vehicle) using the equation of motion or the equation of state, the predetermined constraint, and the performance index stored in the expected model generator 161B. The widely known C/GMRES method may be used as an example of an algorithm used in the optimization operator 162B.

Basic values associated with an equation of motion or an equation of state expressing a dynamic behavior between the space robot 100 (chaser) and the spacecraft 200 (target vehicle) are described below. A control input is joint torque in the actuator 11 included in each active joint in the manipulator. The variable of state includes the position, the attitude angle, the velocity, and the angular velocity of the space robot 100 (chaser), the joint angle and the joint angular velocity of each joint in the manipulator included in the space robot 100 (chaser), and the position, the velocity, the attitude angle, and the angular velocity of the spacecraft 200 (target vehicle). Although all the variables of state are observable, the values of the spacecraft 200 (target vehicle), or more specifically, the position, the velocity, the attitude angle, and the angular velocity may be acquired from the second sensor information or estimated based on the third sensor information.

The impulsive force model (function or map) received from the impulsive force model adjuster 15 is an operator that operates on disturbance, acquired by mathematically expressing, based on the contact parameter, the impulsive force in a direction in which the end-effector is pushed toward the spacecraft 200 (target vehicle) and the friction force defined by the orthogonal component of the impulsive force. More specifically, the impulsive force model is reflected in a performance index.

The above control input is a joint torque command. Thus, the model predictive controller 16B converts the fingertip position and the fingertip attitude implementable by the torque to a fingertip trajectory command, and outputs the command.

The model predictive controller 16B solves the time series of the control input that minimizes the performance index for each of time sections into which a specific time section (horizon) is divided. The solution of the horizon is acquired through repeated calculations within a predetermined control period set for the expected model generator 161B and the optimization operator 162B, a first input of an initial value of each section of the horizon is converted to a fingertip trajectory command, and the command is output from the optimization operator 162B to the velocity controller 20.

The velocity controller 20 is described now. The velocity controller 20 receives the fingertip trajectory command output from the model predictive controller 16B, the first sensor information, and the third sensor information, and outputs the joint torque command to the actuator 11.

The velocity controller 20 performs calculations to generate a joint torque command that causes the actual position and the actual attitude of the chaser and the actual position and the actual attitude of the end-effector to follow the fingertip trajectory command. The actual position and the actual attitude of the chaser are detected as the third sensor information. The actual position and the actual attitude of the end-effector are calculated based on the actual joint angle of each active joint in the manipulator detected as the first sensor information. The velocity controller 20 performs known PID control including a combination of proportional control, integral control, and derivative control using, for example, a deviation between the target position and the actual position and a deviation between the target attitude and the actual attitude. The velocity controller 20 may perform any type of PID control such as PI-D control or I-PD control. The velocity controller 20 may include the model predictive controller 16B.

In Embodiment 3 described above, a constraint can be provided to the fingertip trajectory command upstream from the motion control system. Thus, the constraint of the joint torque command can be easily satisfied, and the joint torque command can be generated more stably.

### Embodiment 4

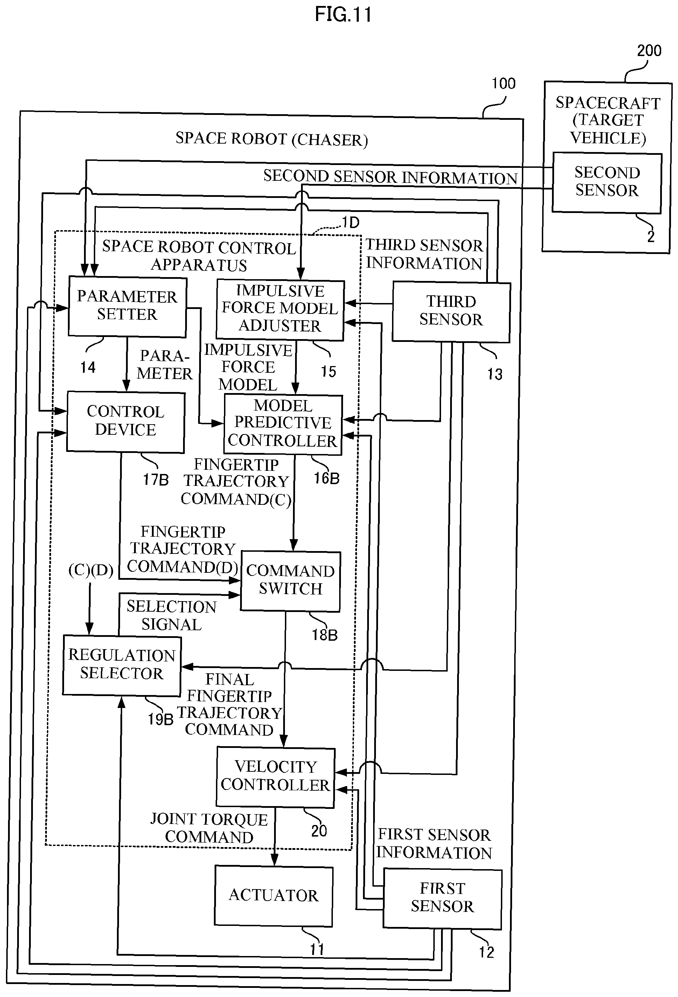

FIG. 11 is a block diagram of a space robot 100 according to Embodiment 4. Embodiment 4 is a combination of Embodiments 2 and 3. The space robot 100 according to Embodiment 4 includes a space robot control apparatus 1D in place of the space robot control apparatus 1A according to Embodiment 1. Of the functional components in the space robot control apparatus 1D, the impulsive force model adjuster 15 is the same as in Embodiment 1, the parameter setter 14 is the same as in Embodiment 2, and the model predictive controller 16B and the velocity controller 20 are the same as in Embodiment 3, and thus are not described.

In addition to the parameter setter 14, the impulsive force model adjuster 15, the model predictive controller 16B, and the velocity controller 20, the space robot control apparatus 1D includes a control device 17B, a command switch 18B, and a regulation selector 19B. Inputs into and outputs from the control device 17B, the command switch 18B, and the regulation selector 19B and the operations of the control device 17B, the command switch 18B, and the regulation selector 19B are described below.

In Embodiment 4, after the motion of the target vehicle is attenuated by the motion attenuation operation described in Embodiment 1, the chaser performs an operation on the target vehicle. Examples of the operation performed on the target vehicle include visual inspection, capture, repair, and refueling.

The control device 17B receives parameters output from the parameter setter 14. The parameters output from the parameter setter 14 to the control device 17B are the same parameters output from the parameter setter 14 to the control device 17A in Embodiment 2.

More specifically, the control device 17B receives the target trajectory of the end-effector during the operation on the target vehicle of the parameters output from the parameter setter 14, or the target trajectory of the end-effector calculated from the parameters output from the parameter setter 14, or more specifically, the target position and the target attitude of the end-effector relative to the target vehicle. In this case, the target position and the target attitude of the end-effector relative to the target vehicle are the same as the fingertip trajectory command output from the control device 17B.

The regulation selector 19B receives a fingertip trajectory command (C) output from the model predictive controller 16B, a fingertip trajectory command (D) output from the control device 17B, and at least the third sensor information, and outputs a selection signal selecting one of the model predictive controller 16B or the control device 17B to the command switch 18B.

Before performing an operation on the target vehicle, the chaser is to complete the motion attenuation operation to sufficiently attenuate the motion of the target vehicle. After the completion of the motion attenuation operation, the chaser proceeds to the operation on the target vehicle.

After the third sensor information detects (switch condition 1 is satisfied) the motion of the target vehicle attenuated to be lower than or equal to a predetermined threshold with the fingertip trajectory command (C) output from the model predictive controller 16B, the regulation selector 19B outputs a selection signal indicating a switch to the control device 17B to the command switch 18B.

The determination as to whether the regulation selector 19B is to switch from the model predictive controller 16B to the control device 17B may be performed based on a sign of a time series of the fingertip trajectory command (C) from the model predictive controller 16B and the fingertip trajectory command (D) from the control device 17B or comparison between the fingertip trajectory command (C) and the fingertip trajectory command (D). The model predictive controller 16B includes the expected model generator 161B and the optimization operator 162B that perform repeated calculations. During calculations in a predetermined control period, the optimization of the performance index resulting from the repeated calculations within the control period may fail to be completed, and an abnormal fingertip trajectory command (C) not satisfying the constraint may be output. When the abnormal fingertip trajectory command (C) is output, the end-effector in the manipulator may perform an unexpected operation. Thus, when an abnormality (for example, a sign of failure to satisfy the constraint, or a sign of superimposition of a continuous frequency component exceeding the resonance frequency of the manipulator on the time series of the fingertip trajectory command) of the fingertip trajectory command (C) is detected (when switch condition 2 is satisfied), a selection signal indicating a switch from the model predictive controller 16B to the control device 17B is output to the command switch 18B. In this case, the control device 17B continues to perform the motion attenuation operation on the target vehicle.

In addition, when the angular velocity of the target vehicle remains without being sufficiently attenuated independently of the control device 17B continuously performing the motion attenuation operation on the target vehicle, the space robot control apparatus 1D may perform the motion attenuation operation on the target vehicle with known compliance control to cause the end-effector to produce an appropriate friction force based on a detection value from a force sensor at the manipulator wrist. The detection value is included in the first sensor information. Alternatively, the regulation selector 19B may output a selection signal indicating a switch to the model predictive controller 16B to the command switch 18B when the fingertip trajectory command (C) output from the model predictive controller 16B cannot satisfy switch condition 2, or in other words, when the fingertip trajectory command (C) returns to the normal state.

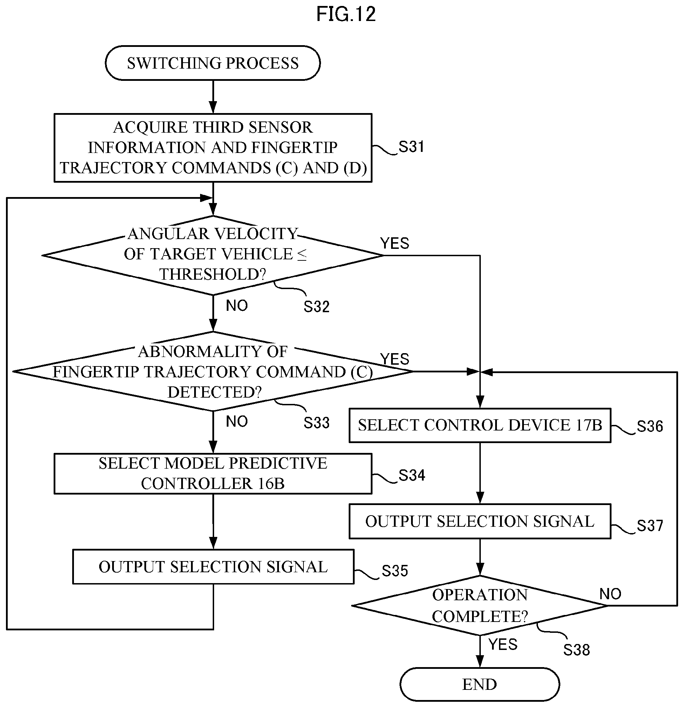

The switching process to determine whether the regulation selector 19B is to select one of the model predictive controller 16B or the control device 17B is described with reference to the flowchart in FIG. 12. The switching process is started when the space robot 100 starts the motion attenuation operation. The regulation selector 19B acquires the third sensor information, the fingertip trajectory command (C) output from the model predictive controller 16B, and the fingertip trajectory command (D) output from the control device 17B (step S31).

The regulation selector 19B determines whether the angular velocity of the target vehicle detected from or estimated with the third sensor information is lower than or equal to a predetermined threshold (step S32). Step S32 corresponds to switch condition 1. When the angular velocity of the target vehicle is not lower than or equal to the threshold (NO in step S32), the regulation selector 19B determines whether any abnormality of the fingertip trajectory command (C) output from the model predictive controller 16B is detected (step S33). Step S33 corresponds to switch condition 2.

When an abnormality of the fingertip trajectory command (C) is detected (YES in step S33), the processing advances to step S36. When no abnormality of the fingertip trajectory command (C) is detected (NO in step S33), the regulation selector 19B selects the model predictive controller 16B (step S34). The regulation selector 19B outputs a selection signal indicating a switch to the model predictive controller 16B to the command switch 18B (step S35). The processing returns to step S32, and steps S32 to S35 are repeated.

When the angular velocity of the target vehicle is lower than or equal to a threshold (YES in step S32), the regulation selector 19B selects the control device 17B (step S36). The regulation selector 19B outputs a selection signal indicating a switch to the control device 17B to the command switch 18B (step S37). When the operation on the target vehicle has not been complete (NO in step S38), the processing returns to step S36, and steps S36 to S38 are repeated. When the operation on the target vehicle is complete (YES in step S38), the processing ends.

In a structure in which the motion attenuation operation is performed on the target vehicle with compliance control when the angular velocity of the target vehicle remains without being sufficiently attenuated independently of the control device 17B continuously performing the motion attenuation operation on the target vehicle, a step of determining whether the angular velocity of the target vehicle is lower than or equal to a threshold is further added after step S37, and another step of performing the motion attenuation operation on the target vehicle with compliance control is further added when the angular velocity of the target vehicle is not lower than or equal to the threshold. In the step of performing the motion attenuation operation on the target vehicle with compliance control, the motion attenuation operation is continuously performed until the angular velocity of the target vehicle reaches or falls below the threshold.

In a structure including a switch to the model predictive controller 16B when the fingertip trajectory command (C) output from the model predictive controller 16B returns to the normal state, a step of determining whether the angular velocity of the target vehicle is lower than or equal to the threshold is further added after step S37. When the angular velocity of the target vehicle is not lower than or equal to the threshold, the processing returns to step S33.

In step S32, the determination as to whether the angular velocity of the target vehicle detected from or estimated with the third sensor information is lower than or equal to a predetermined threshold is performed. Instead, when the second sensor information can be acquired, the determination as to whether the angular velocity of the target vehicle is lower than or equal to a predetermined threshold may be performed based on the second sensor information.

In step S31, the first sensor information may also be acquired to monitor the actuator for any abnormal operation or to monitor the fingertip position or the attitude calculatable with the third sensor information for any abnormal operation.

This switching process allows setting of a regulation appropriate for attenuating the motion of the target vehicle with the model predictive controller 16B, and then precisely controlling the fingertip position or the attitude with another control device. When an output from the model predictive controller 16B has an abnormality, the controller may be switched to another control device to continue the motion attenuation operation.

Referring back to FIG. 11, the command switch 18B receives a selection signal output from the regulation selector 19B, a fingertip trajectory command (C) output from the model predictive controller 16B, and a fingertip trajectory command (D) output from the control device 17B, and outputs a final fingertip trajectory command to the velocity controller 20.

One of the fingertip trajectory command (C) or the fingertip trajectory command (D) is selected by the selection signal output from the regulation selector 19B. When the difference between the fingertip trajectory command (C) and the fingertip trajectory command (D) is less than or equal to a predetermined threshold, the command switch 18B performs switching instantly. When the difference between the fingertip trajectory command (C) and the fingertip trajectory command (D) is greater than the threshold, the command switch 18B performs switching gradually through a bandpass filter. For example, a known low-pass filter or a moving average filter is used as the bandpass filter. This technique can reduce discontinuous changes in the final fingertip trajectory command, and reduce the instability of the control system.

As in Embodiment 3, the velocity controller 20 performs calculations to generate a joint torque command that causes the actual position and the actual attitude of the chaser and the actual position and the actual attitude of the end-effector to follow the fingertip trajectory command. The actual position and the actual attitude of the chaser are detected as the third sensor information. The actual position and the actual attitude of the end-effector are calculated based on the actual joint angle of each active joint in the manipulator detected as the first sensor information. The velocity controller 20 performs known PID control including a combination of proportional control, integral control, and derivative control using, for example, a deviation between the target position and the actual position and a deviation between the target attitude and the actual attitude. The velocity controller 20 may perform any type of PID control such as PI-D control or I-PD control.

In Embodiment 4 described above, when the chaser performs a series of operations including the motion attenuation operation and an operation on the target vehicle having the motion sufficiently attenuated, regulations appropriate for the corresponding operations are switched to improve the usability of the operation of the space robot within a range from rough control of attenuating the motion of the target vehicle to precise control of performing an operation on the target vehicle having the motion sufficiently attenuated, such as visual inspection, repair, assembly, and refueling. In addition, a constraint can be provided to the fingertip trajectory command upstream from the motion control system. Thus, the constraint of the joint torque command can be easily satisfied, and the joint torque command can be generated more stably.

To implement the functional components in the space robot control apparatuses 1A, 1B, 1C, and 1D illustrated in FIGS. 1, 7, 9, and 11 with hardware, separate control circuits or one collective control circuit may be used.

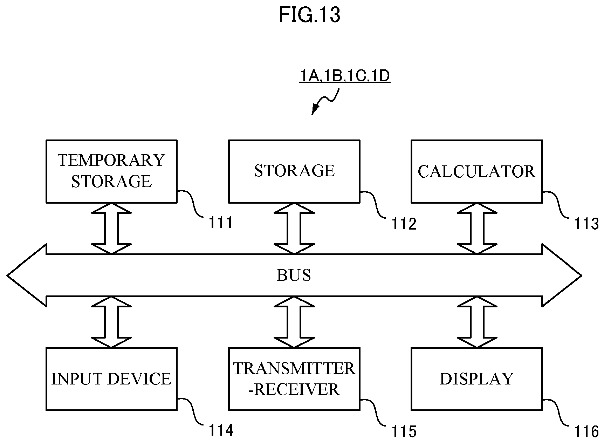

The hardware configuration to implement the functional components in the space robot control apparatuses 1A, 1B, 1C, and 1D illustrated in FIGS. 1, 7, 9, and 11 with software is described with reference to FIG. 13. As illustrated in FIG. 13, the space robot control apparatuses 1A, 1B, 1C, and 1D each include a temporary storage 111, a storage 112, a calculator 113, an input device 114, a transmitter-receiver 115, and a display 116. The temporary storage 111, the storage 112, the input device 114, the transmitter-receiver 115, and the display 116 are connected to the calculator 113 with a bus.

The calculator 113 is, for example, a central processing unit (CPU). In accordance with a control program stored in the storage 112, the calculator 113 performs the processing of the parameter setter 14, the impulsive force model adjuster 15, the model predictive controller 16A, the model predictive controller 16B, the control device 17A, the control device 17B, the command switch 18A, the command switch 18B, the regulation selector 19A, the regulation selector 19B, and the velocity controller 20 in each of the space robot control apparatuses 1A, 1B, 1C, and 1D.

The temporary storage 111 is, for example, a random-access memory (RAM). A control program stored in the storage 112 is loaded into the temporary storage 111 that is used as a work area for the calculator 113.

The storage 112 is a nonvolatile memory such as a flash memory, a hard disk, a digital versatile disc RAM (DVD-RAM), or a DVD rewritable (DVD-RW). The storage 112 prestores a program for causing the calculator 113 to perform the processing of each of the space robot control apparatuses 1A, 1B, 1C, and 1D, provides data stored in this program to the calculator 113 in accordance with an instruction from the calculator 113, and stores data provided from the calculator 113. A portion that stores the values of the parameter setter 14 is included in the storage 112.

The input device 114 includes, for example, a keyboard and a pointing device, and serves as an interface device that connects, for example, the keyboard and the pointing device to the bus. Information input by a user with the input device 114 is provided to the calculator 113. In a structure in which each of the space robot control apparatuses 1A, 1B, 1C, and 1D can receive inputs of data from the user, the user inputs data into the input device 114.

The transmitter-receiver 115 serves as a network terminal or a wireless communication device connected to a network and a serial interface or a local area network (LAN) interface connected to the network terminator or the wireless communication device. In a structure in which the second sensor information is shared in communication between the space robot 100 and the spacecraft 200, the transmitter-receiver 115 functions as a communicator for the spacecraft 200.

The display 116 is a display device such as a cathode ray tube (CRT) or a liquid crystal display (LCD). For example, the display 116 displays an operation screen on which the user inputs information. In a structure in which each of the space robot control apparatuses 1A, 1B, 1C, and 1D can receive inputs of data from the user, the display 116 displays a screen on which information is input.

The processing of the parameter setter 14, the impulsive force model adjuster 15, the model predictive controller 16A, the model predictive controller 16B, the control device 17A, the control device 17B, the command switch 18A, the command switch 18B, the regulation selector 19A, the regulation selector 19B, and the velocity controller 20 in each of the space robot control apparatuses 1A, 1B, 1C, and 1D illustrated in FIGS. 1, 7, 9, and 11 is performed by the control program performing processing using, for example, the temporary storage 111, the calculator 113, the storage 112, the input device 114, the transmitter-receiver 115, and the display 116 as resources.

The hardware configuration and the flowcharts described above are examples, and may be changed or modified as appropriate.

The main components that perform the processing of the space robot control apparatuses 1A, 1B, 1C, and 1D each including the calculator 113, the temporary storage 111, the storage 112, the input device 114, the transmitter-receiver 115, and the display 116 can be implemented with a common computer system, rather than with a dedicated system. For example, a computer program executable to implement the above operation may be stored in a non-transitory computer-readable recording medium, such as a flexible disk, a compact disc read-only memory (CD-ROM), or a DVD-ROM for distribution. The computer program may be installed in a computer to provide the space robot control apparatuses 1A, 1B, 1C, and 1D that perform the above processing. In some embodiments, the computer program may be stored in a storage device included in a server device on a communication network such as the Internet, and may be downloaded by a common computer system to implement the space robot control apparatuses 1A, 1B, 1C, and 1D.

In the system with the above functions of each of the space robot control apparatuses 1A, 1B, 1C, and 1D implementable partially by the operating system (OS) and partially by an application program or through cooperation between the OS and the application program, portions executable by the application program other than the OS may be stored in a non-transitory recording medium or a storage device.

The computer program may be superimposed on a carrier wave to be provided through a communication network. For example, the computer program may be posted on a bulletin board system (BBS) on the communication network to be provided through the communication network. The computer program may be activated and executed under the control of the OS in the same manner as another application program to perform the above processing.

The parameter setter, the impulsive force model adjuster, the model predictive controller, the control device, the regulation selector, and the velocity controller descried in the embodiments described above may be implemented by software, as described above, or hardware.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Reference Signs List

1A, 1B, 1C, 1D Space robot control apparatus
2 Second sensor
11 Actuator
12 First sensor
13 Third sensor
14 Parameter setter
15 Impulsive force model adjuster
16A, 16B Model predictive controller
17A, 17B Control device
18A, 18B Command switch
19A, 19B Regulation selector
20 Velocity controller
100 Space robot
111 Temporary storage
112 Storage
113 Calculator
114 Input device
115 Transmitter-receiver
116 Display
161A, 161B Expected model generator
162A, 162B Optimization operator
200 Spacecraft

## Claims

1. A space robot control apparatus for controlling a space robot, the space robot being a robot to perform a motion attenuation operation to attenuate, with a manipulator, a motion of a spacecraft moving in outer space, the space robot control apparatus being configured to
acquire first sensor information indicating a detection value from a first sensor configured to detect an internal state of the manipulator,
acquire third sensor information indicating a detection value from a third sensor configured to detect an internal state and an external environmental state of the space robot, and
acquire second sensor information indicating a detection value from a second sensor configured to detect an internal state and an external environmental state of the spacecraft, the space robot control apparatus comprising:
a parameter setter to set, using the second sensor information, a parameter for controlling the manipulator to perform the motion attenuation operation;
an impulsive force model adjuster to generate an impulsive force model defining an impulsive force resulting from a contact of an end-effector in the manipulator against the spacecraft when the manipulator performs the motion attenuation operation based on the first sensor information, the third sensor information, and the second sensor information; and
a model predictive controller to generate, using the parameter set by the parameter setter and the impulsive force model generated by the impulsive force model adjuster, a joint torque command to be provided to joints in the manipulator to perform the motion attenuation operation, and to output the joint torque command to an actuator configured to drive the joints in the manipulator.

2. The space robot control apparatus according to claim 1, further comprising:
a control device to generate a joint torque command to be provided to the joints in the manipulator to perform an operation on the spacecraft with the motion attenuated by the motion attenuation operation;
a regulation selector to select one of the model predictive controller or the control device; and
a command switch to output the joint torque command from the model predictive controller or the control device selected by the regulation selector to the actuator configured to drive the joints in the manipulator,
wherein the parameter setter sets, using the second sensor information, a parameter for controlling the manipulator to perform the operation on the spacecraft.

3. The space robot control apparatus according to claim 1 or 2, wherein
the parameter setter stores an initial value and a terminal value of the internal state of the manipulator, initial values and terminal values of the internal state and the external environmental state of the space robot, and terminal values of the internal state and the external environmental state of the spacecraft when the manipulator performs an operation on the spacecraft,
the parameter setter acquires initial values of the internal state and the external environmental state of the spacecraft and a center of gravity of the spacecraft, and
the parameter set by the parameter setter includes the initial value and the terminal value of the internal state of the manipulator, the initial values and the terminal values of the internal state and the external environmental state of the space robot, the initial values and the terminal values of the internal state and the external environmental state of the spacecraft, and the center of gravity of the spacecraft when the manipulator performs an operation on the spacecraft or includes a target trajectory of the end-effector in the manipulator determined based on the initial values, the terminal values, or the center of gravity.

4. The space robot control apparatus according to any one of claims 1 to 3, wherein
the model predictive controller generates, when the motion attenuation operation is performed, a joint torque command for the manipulator to minimize a predetermined performance index within a predetermined constraint based on a group of initial values and a group of terminal values of the space robot, the manipulator, and the spacecraft in the parameter setter, or
the model predictive controller generates a fingertip trajectory command for an end-effector in the manipulator implementable by the joint torque command.

5. A space robot for performing a motion attenuation operation to attenuate, with a manipulator, a motion of a spacecraft moving in outer space, the space robot comprising:
a first sensor to detect an internal state of the manipulator;
a third sensor to detect an internal state and an external environmental state of the space robot; and
a space robot control apparatus to control the space robot, the space robot control apparatus including
a parameter setter to set, using second sensor information, a parameter for controlling the manipulator to perform the motion attenuation operation, the second sensor information indicating a detection value from a second sensor configured to detect an internal state and an external environmental state of the spacecraft,
an impulsive force model adjuster to generate an impulsive force model defining an impulsive force resulting from a contact of an end-effector in the manipulator against the spacecraft when the manipulator performs the motion attenuation operation based on first sensor information indicating a detection value from the first sensor, third sensor information indicating a detection value from the third sensor, and the second sensor information, and
a model predictive controller to generate, using the parameter set by the parameter setter and the impulsive force model generated by the impulsive force model adjuster, a joint torque command to be provided to joints in the manipulator to perform the motion attenuation operation, and to output the joint torque command to an actuator configured to drive the joints in the manipulator.

6. A space robot control method implementable with a space robot control apparatus to control a space robot, the space robot being a robot to perform a motion attenuation operation to attenuate, with a manipulator, a motion of a spacecraft moving in outer space, the method comprising:
setting a parameter for controlling the manipulator to perform the motion attenuation operation using second sensor information indicating an internal state and an external environmental state of the spacecraft or third sensor information indicating an internal state and an external environmental state of the space robot;
generating an impulsive force model defining an impulsive force resulting from a contact of an end-effector in the manipulator against the spacecraft when the manipulator performs the motion attenuation operation based on first sensor information indicating an internal state of the manipulator and at least the third sensor information; and
generating, using the set parameter and the generated impulsive force model, a joint torque command to be provided to joints in the manipulator to perform the motion attenuation operation, and outputting the joint torque command to an actuator configured to drive the joints in the manipulator.

7. A program executable by a computer to control a space robot, the space robot being a robot to perform a motion attenuation operation to attenuate, with a manipulator, a motion of a spacecraft moving in outer space, the program causing the computer to function as:
a parameter setter to set a parameter for controlling the manipulator to perform the motion attenuation operation using second sensor information indicating a detection value from a second sensor configured to detect an internal state and an external environmental state of the spacecraft;
an impulsive force model adjuster to generate an impulsive force model defining an impulsive force resulting from a contact of an end-effector in the manipulator against the spacecraft when the manipulator performs the motion attenuation operation based on first sensor information, third sensor information, and the second sensor information, the first sensor information indicating a detection value from a first sensor configured to detect an internal state of the manipulator, the third sensor information indicating a detection value from a third sensor configured to detect an internal state and an external environmental state of the space robot; and
a model predictive controller to generate, using the parameter set by the parameter setter and the impulsive force model generated by the impulsive force model adjuster, a joint torque command to be provided to joints in the manipulator to perform the motion attenuation operation, and to output the joint torque command to an actuator configured to drive the joints in the manipulator.
